# EUROPÄISCHE PATENTSCHRIFT

(11) **EP 4 286 079 B1**
(45) Veröffentlichungstag und Bekanntmachung des Hinweises auf die Patenterteilung: **11.09.2024**
(21) Anmeldenummer: 22176975.5
(22) Anmeldetag: 02.06.2022
(51) Int. Cl.: B23B 1/00, B23B 29/12, B23B 29/04, B23B 27/14

(54) **WERKZEUGSYSTEM UND VERFAHREN ZUR BEARBEITUNG EINES WERKSTÜCKS MIT DEM WERKZEUGSYSTEM**
TOOL SYSTEM AND METHOD OF MACHINING A WORKPIECE WITH THE TOOL SYSTEM
SYSTÈME D'OUTIL ET PROCÉDÉ POUR L'USINAGE D'UNE PIÈCE UTILISANT CE SYSTÈME

(43) Veröffentlichungstag der Anmeldung: 06.12.2023
(73) Patentinhaber: CERATIZIT Austria Gesellschaft m.b.H., 6600 Reutte (AT); CERATIZIT Besigheim GmbH, 74354 Besigheim (DE)
(72) Erfinder: SINGER-SCHNÖLLER, Alexander, 6600 Reutte (AT); TROST, Johannes, 6600 Reutte (AT); SCHMID, Lothar, 6600 Reutte (AT); MAIER, Jens, 74354 Besigheim (DE); KOFFLER, Torsten, 74354 Besigheim (DE)
(74) Vertreter: Ciesla, Dirk

(56) Entgegenhaltungen:
- EP-A1- 0 290 515
- EP-A1- 3 501 701
- EP-A1- 3 838 455
- DE-A1- 10 306 845
- DE-A1- 102013 217 911
- DE-A1- 102015 114 727
- DE-A1- 102019 006 466
- US-A1- 2004 244 546
- US-A1- 2010 005 936

## Beschreibung

Die vorliegende Erfindung betrifft ein Werkzeugsystem mit den Merkmalen des Oberbegriffs von Anspruch 1. Insbesondere betrifft die Erfindung ein Werkzeugsystem zur Durchführung einer Drehbearbeitung.

Aus der EP3501701 A1 der Anmelderin sind ein derartiges Werkzeugsystem und ein Verfahren für die zerspanende Drehbearbeitung bekannt, bei welchem durch gesteuerte Drehung des Werkzeugkörpers um dessen Längsachse und damit koordinierte Translationsbewegung des Werkzeugkörpers eine Spanbildung am Schneideinsatz verändert werden kann. So kann etwa ein Anstellwinkel einer aktiv zerspanenden Schneide verändert werden. Es können z.B. mit nur einem Werkzeugkörper und einem darauf angeordneten Schneideinsatz verschiedene Drehbearbeitungen, wie z.B. Längsdrehen, Plandrehen und Kopierdrehen realisiert werden.

Für die Realisierung bedarf es jedoch einer gesteuerten Drehung und eine damit koordinierte Translationsbewegung des Werkzeugkörpers, was jedenfalls ein programmierbares Dreh- / Fräszentrum erfordert.

Die US 2004/244546 A1 (MITSUZONO MASAAKI) offenbart ein Werkzeugsystem, das einen elektrischen Stellantrieb umfasst, der dazu ausgebildet ist, durch ein Drehen des werkzeugseitigen Schafts um dessen Längsachse eine Ausrichtung des Schneideinsatzes zu verändern.

Die DE10306845 A1 (Universität Bremen) zeigt ein Werkzeug für die spanende Bearbeitung mit einem integrierten Stellelement zur Nachstellung des Werkzeugs.

Die DE102019006466 A1 (Blum-Novotest, KOMET Deutschland) zeigt ein Werkzeug mit einer Werkzeug-Verstelleinrichtung zur elektrischen Verstellung des Werkzeugs.

Aufgabe der vorliegenden Erfindung ist es, ein Werkzeugsystem anzugeben, welches eine einfachere Veränderung der Spanbildung erlaubt.

Diese Aufgabe wird gelöst durch ein Werkzeugsystem mit den Merkmalen von Anspruch 1. Bevorzugte Weiterbildungen sind in den abhängigen Ansprüchen angegeben.

Indem das Werkzeugsystem ein Generatormodul zur Wandlung einer mechanischen Antriebsleistung in elektrische Leistung zur Versorgung des elektrischen Stellantriebs aufweist, kann eine mechanische Antriebsleistung, wie sie an angetriebenen Werkzeugaufnahmen zur Verfügung steht, in elektrische Leistung zur Versorgung des elektrischen Stellantriebs gewandelt werden.

Indem ein elektrischer Stellantrieb eine Verdrehung des werkzeugseitigen Schafts erlaubt, ist die Möglichkeit einer Veränderung der Spanbildung an dem Schneideinsatz des Werkzeugsystems geschaffen, ohne dass dazu eine zu einer Drehung eines darin aufgenommenen Werkzeugschafts ausgebildete Werkzeugaufnahme erforderlich wäre.

Unter Veränderung der Spanbildung ist beispielsweise eine Veränderung eines Anstellwinkels des Schneideinsatzes gemeint. Auch kann beispielsweise der

Schneideinsatz durch den elektrischen Stellantrieb gedreht werden, um etwa einen frischen Schneidkantenabschnitt in eine Bearbeitungsposition zu bringen.

Das erfindungsgemäße Werkzeugsystem mit elektrischem Stellantrieb erlaubt eine besonders präzise und spielfreie Drehbewegung.

Gegenüber einer rein mechanischen Lösung erlaubt ein elektrischer Stellantrieb eine einfachere und genauere Regel- / Steuerbarkeit sowie weniger bewegte Masse an der Spindel.

Ein elektrischer Motor kann durch seine kompakte Bauweise besonders nah an das zu drehende Werkzeug rücken.

Der elektrische Stellantrieb erlaubt eine Variation einer Winkelgeschwindigkeit der Drehbewegung. Damit ist es möglich, eine Referenzposition zunächst schnell anzunähern, um schließlich die finale Position in einer Feineinstellung langsam zu erreichen. In anderen Worten kann eine dynamische Verstellung erfolgen. Das wäre bei einer rein mechanischen Lösung nicht oder technisch nur unbefriedigend realisierbar.

Das erfindungsgemäße Werkzeugsystem erlaubt es, dass der elektrische Stellantrieb als vollwertige NC-Achse (NC: *numerical control*) in eine Maschinensteuerung eingebunden wird. Dies ist besonders vorteilhaft: eine Ansteuerung des elektrischen Stellantriebs kann damit in gleicher Weise hinterlegt werden wie Ansteuerungen der ohnehin an der numerisch gesteuerten Werkzeugmaschine verfügbaren Achsen. Üblicherweise verfügen numerisch gesteuerte Werkzeugmaschinen über drei lineare Achsen (X, Y, und Z), und optional über zusätzliche Rundachsen, welche den Hauptführungsbahnen der Werkzeugmaschine entsprechen. Durch das erfindungsgemäße Werkzeugsystem kommt eine weitere steuerbare / regelbare Dimension dazu.

Optional kann ein zusätzlicher Drehgeber nahe an das Werkzeug platziert werden und so der tatsächliche Winkel an eine Maschinensteuerung zurückgemeldet werden. In diesem Fall spricht man von einem direkten Messsystem mit geregelter NC-Achse.

Der elektrische Stellantrieb ist in seiner Funktion weitgehend unabhängig von einer eigentlichen maschinenseitig bereits vorhandenen Werkzeugspindel. Dies erlaubt eine einfache Umsetzung der oben genannten Funktionen wie der Verstellung des Schneideinsatzes und einer Verwendbarkeit des Werkzeugsystems für vielfältige Zerspanungsoperationen, ohne dass die Werkzeugmaschine vom Hersteller eigens dafür ausgestattet ist oder besondere konstruktive Merkmale aufweist.

So ist es mit geringem Aufwand möglich, bereits am Markt vorhandene Maschinen umzurüsten. Ebenso sind Werkzeugmaschinen am Markt vorhanden, bei welchen im Drehbetrieb die Werkzeugspindel geklemmt und somit verriegelt sein muss, da dies vom Hersteller so vorgesehen ist. Auch bei diesen Voraussetzungen ist ein elektrischer Stellantrieb einsetzbar und ergänzt die Maschine um die oben beschriebene Schwenkfunktion des Drehwerkzeuges.

Der erfindungsgemäße elektrische Stellantrieb kann entweder durch ein Steuerungsmodul der Werkzeugmaschine selbst oder ein eigenes dafür vorgesehenes Modul angesteuert werden. Neben einem Steuer- und Regelbetrieb zur Positionierung des Werkzeughalters bzw. des Schneideinsatzes sind auch zusätzliche Funktionsanbindungen denkbar, welche positive Einflüsse auf den Drehprozess oder die Genauigkeit haben. Dies können insbesondere Kompensationsbewegungen zum Ausgleich von Ungenauigkeiten oder Störeinflüssen im Prozess sein, wie eine Korrektur von Werkzeugverschleiß oder eine Kompensation einer Abdrängung des Werkzeuges durch Bearbeitungskräfte.

Ferner lassen sich über einen elektrischen Stellantrieb Bewegungsmuster und -geschwindigkeiten realisieren, die über einen rein mechanischen VerstellAntrieb nicht möglich wären. Eine gewünschte Position kann beispielsweise zunächst rasch angenähert werden, um dann im Zuge einer Feinverstellung die finale Position mit verringerter Winkelgeschwindigkeit der Drehbewegung anzufahren.

Ebenfalls vorstellbar ist es, über eine Programmierung eines elektrischen Stellantriebs, bestimmte Positionen zu "sperren" - beispielsweise um Kollisionen des Schneideinsatzes oder ähnliches zu vermeiden.

Als insbesondere vorteilhaft hat sich erwiesen, den elektrischen Stellantrieb als mechatronisches Antriebsmodul auszubilden. Mechatronische Antriebsmodule sind grundsätzlich zur Betätigung von Aussteuerwerkzeugen bekannt. Diese Aussteuerwerkzeuge finden Anwendung in der Einbringung von Drehkonturen an stehenden Werkstücken. Für das vorliegende erfindungsgemäße Werkzeugsystem kann ein mechatronisches Antriebsmodul zur Bewirkung der Verdrehung des Werkzeughalters genutzt werden.

Dazu wird der Elektromotor des mechatronischen Antriebsmoduls unmittelbar oder mittels Getriebe zum Drehen des werkzeugseitigen Schafts genutzt.

Bevorzugt ist am erfindungsgemäßen Werkzeugsystem ein Winkelgeber für eine Rückmeldung einer tatsächlichen Winkelposition des werkzeugseitigen Schafts vorgesehen. Der Winkelgeber erlaubt es, eine Information zum tatsächlichen Zerspanungswinkel an einer Schneide des Schneideinsatzes an die Maschinensteuerung zu melden.

Indem die Längsachse des werkzeugseitigen Schafts und die Längsachse des Werkzeughalters zusammenfallen oder wenigstens parallel zueinander verlaufen, werden am Schneideinsatz auftretende, axial auf den Plattensitz gerichtete Bearbeitungskräfte in Richtung der Längsachse des Werkzeughalters auf den werkzeugseitigen Schaft übertragen.

Folglich wirken nur geringe Biegemomente auf den Werkzeughalter und den werkzeugseitigen Schaft. Diese Anordnung ist besonders steif.

Bei einer Erstreckung des Werkzeughalters geneigt zum werkzeugseitigen Schaft würden Bearbeitungskräfte ein Biegemoment auf den Werkzeughalter erzeugen.

Besteht ein Versatz zwischen Längsachse des werkzeugseitigen Schafts und Längsachse des Werkzeughalters, bewirkt eine Verdrehung des werkzeugseitigen Schafts eine Bewegung des Werkzeughalters entlang einer Kreisbahn um die Längsachse des werkzeugseitigen Schafts.

In einer alternativen Ausprägung fallen die Längsachse des werkzeugseitigen Schafts, welche zugleich Drehachse der vom elektrischen Stellantrieb ausübbaren Drehbewegung ist, und die Längsachse des Werkzeughalters zusammen. Eine Verdrehung des werkzeugseitigen Schafts bewirkt in dieser Anordnung eine Verdrehung des Werkzeughalters ohne Schwenkbewegung.

Bevorzugt ist vorgesehen, dass der Werkzeughalter so angeordnet ist, dass sich der Werkzeughalter in einer Draufsicht entlang der Längsachse des werkzeugseitigen Schafts innerhalb eines Umkreises einer Außenkontur des werkzeugseitigen Schafts befindet. Damit werden Bearbeitungskräfte im Wesentlichen zentral in das Werkzeugsystem geleitet.

Weiter bevorzugt ist vorgesehen, dass - in einer Draufsicht parallel zur Längsachse des Werkzeughalters - eine Schneidkante des Schneideinsatzes innerhalb eines Umkreises des werkzeugseitigen Schafts liegt. Dies trifft, weiter bevorzugt, für alle Positionen des Schneideinsatzes zu, welche der Schneideinsatz über die Verdrehung des Werkzeughalters einnehmen kann. Damit ist zum Ausdruck gebracht, dass der Umfang des Schneideinsatzes bevorzugt nicht über den Umkreis des werkzeugseitigen Schafts hinausragt, was die Steifigkeit der Anordnung bei einem Einsatz weiter verbessert.

Weiter bevorzugt ist vorgesehen, dass der Werkzeughalter so angeordnet ist, dass die Längsachse des werkzeugseitigen Schafts - in einer Draufsicht parallel zur Längsachse des Werkzeughalters - innerhalb der als Spanfläche ausgebildeten Oberseite des Schneideinsatzes liegt.

Diese Anordnung ist günstig bezüglich einer Krafteinleitung, da auf den werkzeugseitigen Schaft nur geringe Biegemomente ausgeübt werden.

Das Werkzeugsystem kann gemäß einer Ausführungsform so ausgebildet sein, dass die Längsachse des werkzeugseitigen Schafts und damit die Drehachse des werkzeugseitigen Schafts durch einen Schneideckenradiusmittelpunkt des Schneideinsatzes verläuft. In diesem Fall ist die betreffende Schneidecke des Schneideinsatzes insofern invariant bezüglich der Drehung, als keine Korrektur der Zustellung erforderlich ist.

Der Plattensitz ist so ausgebildet, dass die Oberseite des Schneideinsatzes quer zur Längsachse des Werkzeughalters verläuft. Es kann vorgesehen sein, dass eine Ebenennormale der als Spanfläche ausgebildeten Oberseite des Schneideinsatzes parallel zur Längsachse des Werkzeughalters verläuft.

Bei einer Ausgestaltung des Schneideinsatzes mit im Wesentlichen planparalleler Anordnung von Oberseite und Unterseite ist der Plattensitz quer Längsachse des Werkzeughalters ausgebildet.

In einer bevorzugten Weiterbildung weist das Werkzeugsystem eine innenliegende Kühlmittelversorgung auf. Über den maschinenseitigen Schaft ist eine Übergabe von Kühlmittel an das Zerspannungswerkzeug möglich.

In einer Ausgestaltung kann der Elektromotor des elektrischen Stellantriebs als Hohlwellenmotor ausgebildet sein, was eine zentrale Führung eines Kühlmittelkanals erlaubt.

Eine innenliegende Kühlmittelversorgung erlaubt insbesondere eine Minimalmengenschmierung.

Indem der elektrische Stellantrieb Teil des Werkzeugsystems ist, können die Vorteile einer veränderbaren Spanbildung auf einfachen Trägersystemen realisiert werden. Beispielsweise kann das erfindungsgemäße Werkzeugsystem auf einem Werkzeugrevolver montiert werden, der hierfür nicht über einen Werkzeugantrieb verfügen muss.

Die Energieversorgung des elektrischen Stellantriebs erfolgt bevorzugt über ein Kabel. Hierzu ist es bevorzugt vorgesehen, den elektrischen Stellantrieb so auszubilden, dass Drehbewegungen in einem Ausmaß von größer 360° gesperrt werden, um eine Beschädigung der Leitungen zu vermeiden.

Eine alternative Versorgung über Schleifkontakte erlaubt ein "Durchdrehen", d.h. Drehbewegungen in einem Ausmaß von größer 360°.

In einer weiteren bevorzugten Variante erfolgt eine berührungslose Energieübertragung über einen Luftspalt, welcher typischerweise einen Abstand von wenigen 1/10 Millimetern (z.B. 0,5mm bei U-Achssystemen) beträgt. Hierfür wird maschinenseitig ein Stator an der Werkzeugaufnahme angebracht.

In einer weiteren Alternative wäre eine batteriegestützte Lösung vorstellbar.

Bevorzugt ist vorgesehen, dass der elektrische Stellantrieb Mittel zur Steuerung und / oder Regelung einer Positionierung des Werkzeughalters umfasst.

Eine Steuerung / Regelung kann kabelgeführt oder kabellos erfolgen.

Daten für eine Steuerung werden bevorzugt zusammen mit der Energieversorgung kabelgebunden bzw. kabellos an die Steuerung übertragen. Alternativ können die Daten per Funk unabhängig von der Energieversorgung über eine größere Distanz an die Maschine gesendet werden.

Üblicherweise wird der Mechatronische Antrieb als vollwertige NC-Achse an die NC-Steuerung eingebunden. Die Schnittstelle kann analog oder digital ausgeführt sein.

Bevorzugt weist das Werkzeugsystem wenigstens einen Sensor zur Erfassung von Betriebsbedingungen auf. Der Sensor zur Erfassung von Betriebsbedingungen kann beispielsweise ein Schwingungs-, ein Beschleunigungs-, ein Temperatur- oder ein Biegesensor sein.

Der Sensor zur Erfassung von Betriebsbedingungen kann über die durch ihn erfassten Daten helfen, den Zerspannungsprozess zu überwachen und beispielsweise Verschleiß der Schneide zu erkennen.

Es können Schnittbedingungen und Veränderungen davon erfasst werden. Über den Sensor zur Erfassung von Betriebsbedingungen können Betriebsdaten zur Bemessung von Wartungsintervallen bestimmt werden.

Erfindungsgemäß weist das Werkzeugsystem ein Generatormodul zur Wandlung einer mechanischen Antriebsleistung in elektrische Leistung zur Versorgung des elektrischen Stellantriebs auf. Demgemäß kann eine mechanische Antriebsleistung, wie sie an angetriebenen Werkzeugaufnahmen zur Verfügung steht (beispielsweise um damit mit einer Drehmaschine auch Fräs- oder Bohroperationen durchzuführen), in elektrische Leistung zur Versorgung des elektrischen Stellantriebs gewandelt werden. Dies hat den besonderen Vorteil, dass der zur Wandlung in elektrische Leistung genutzte mechanische Antrieb nicht steuer- oder regelbar sein muss. Weiters braucht das erfindungsgemäße Werkzeugsystem damit keine eigene Stromversorgung aufzuweisen. Dieser Generator versorgt die Elektronik sowie den Motor innerhalb des Werkzeugsystems.

Bevorzugt ist vorgesehen, dass das Werkzeugsystem eine Datenschnittstelle aufweist, über die Befehle zur Betätigung des elektrischen Stellantriebs eingelesen und / oder Daten ausgelesen werden können.

Auslesbar können zum Beispiel Daten zu einer Position, etwa einer Winkellage, des elektrischen Stellantriebs sein. Ferner können bei entsprechender Instrumentierung auch Schnittdaten des Schneideinsatzes erfasst werden.

Die Datenschnittstelle kann insbesondere kabellos ausgeführt sein, beispielsweise als Hochfrequenz-Band, insbesondere als 2,4Ghz ISM-Band (ISM: *industry, science, medical*)
Alternativ können die Daten optisch oder induktiv berührungslos an die Maschine übertragen werden.

Weiter bevorzugt verfügt das erfindungsgemäße Werkzeugsystem über eine Sensorik, um Kräfte und / oder Positionsinformationen des Werkzeughalters aufzunehmen.

Eine bezüglich des Instrumentierungsaufwands günstige Lösung kann beispielsweise darin bestehen, einen zur Bewirkung einer Verdrehung des Schneideinsatzes erforderlichen elektrischen Strom mit aktuellen Schnittkräften zu korrelieren.

Weiter bevorzugt umfasst das erfindungsgemäße Werkzeugsystem wenigstens einen Sensor zur Erfassung wenigstens einer Positionsinformation des Werkzeughalters bzw. des darauf fixierten Schneideinsatzes.

Der Sensor zur Erfassung wenigstens einer Positionsinformation kann beispielsweise ein magnetischer oder optischer Drehgeber sein.

Die Drehung des werkzeugseitigen Schafts bewirkt eine Drehung oder Verschwenkung des am werkzeugseitigen Schaft angeordneten Werkzeughalters.

Die Längsachse des werkzeugseitigen Schafts ist bevorzugt gleichzeitig dessen Drehachse, um die der elektrische Stellantrieb den werkzeugseitigen Schaft dreht.

Der Werkzeughalter weist eine Längserstreckung auf, entlang derer die Längsachse des Werkzeughalters verläuft.

Der Werkzeughalter weist an der dem werkzeugseitigen Schaft abgewandten Seite eine Stirnseite auf, an der der Plattensitz ausgebildet ist. Der Plattensitz ist bevorzugt so gestaltet, dass eine Ebenennormale der als Spanfläche ausgebildeten Oberseite des am Plattensitz befestigten Schneideinsatzes parallel zur Längsachse des Werkzeughalters verläuft. Die Oberseite des Schneideinsatzes verläuft quer zur Längsachse des Werkzeughalters. Damit ist eine günstige Krafteinleitung der Bearbeitungskräfte entlang der Längsachse des Werkzeughalters gegeben. Insbesondere ist vorgesehen, dass der Plattensitz sich mittig auf der Stirnseite des Werkzeughalters befindet. Insbesondere bevorzugt ist es, wenn eine gedachte Achse einer zentralen Befestigungsbohrung des Schneideinsatzes mit der Längsachse des Werkzeughalters zusammenfällt.

Die Änderung der Ausrichtung des Schneideinsatzes erfolgt derart, dass der Schneideinsatz entweder eine reine Rotation um die Längsachse des Werkzeughalters erfährt, wenn die Längsachse des Werkzeughalters mit der des werkzeugseitigen Schafts zusammenfällt, oder eine Schwenkbewegung erfährt, wenn die Längsachse des Werkzeughalters nicht mit der des werkzeugseitigen Schafts zusammenfällt.

Die Drehachse der Drehbewegung ist parallel zur Längsachse des Werkzeughalters oder fällt mit dieser zusammen.

Insbesondere erfolgt die Bewegung des Schneideinsatzes in einer Ebene, die von der als Spanfläche ausgebildeten Oberseite des Schneideinsatzes aufgespannt wird.

Insbesondere erfolgt die Bewegung des Schneideinsatzes innerhalb einer Einhüllenden der Außenkontur des werkzeugseitigen Schafts.

Bevorzugt fällt die Längsachse des Werkzeughalters mit der des werkzeugseitigen Schafts zusammen.

In anderen Worten wird eine geringe Exzentrizität des Werkzeughalters bezüglich der Drehachse der Drehbewegung angestrebt.

Es kann vorgesehen sein, dass der werkzeugseitige Schaft parallel zum Aufnahmeschaft verläuft.

Gemäß einer Ausführungsform besteht ein lateraler Versatz zwischen der Längsachse des Aufnahmeschafts und der Längsachse des werkzeugseitigen Schafts. Diese gekröpfte Anordnung ist besonders vorteilhaft für einen Einsatz des Werkzeugsystems an einem sogenannten Sternrevolver, also einem Werkzeugträger mit umfangsseitiger (radialer) Anordnung von Werkzeugaufnahmen.

Alternativ kann das Werkzeugsystem abgewinkelt ausgeführt sein, indem der werkzeugseitige Schaft in einem Winkel zum Aufnahmeschaft verläuft, beispielsweise 90° zum Aufnahmeschaft verläuft.

Der Schneideinsatz kann nach einem Ausführungsbeispiel als ein im Wesentlichen kreisrunder Schneideinsatz ausgebildet sein. Eine Rotation des Schneideinsatz um seine Mittelachse verändert somit nicht die Winkelverhältnisse bei einer zerspanenden Bearbeitung, vielmehr kann unter dem Schnitt ein frischer Schneidkantenabschnitt angeboten werden. Dies kann eingesetzt werden, um einen Verschleiß und / oder eine Wärmeabfuhr gleichmäßig entlang der gesamten Schneidkantenlänge zu verteilen.

Alternativ und bevorzugt weist der Schneideinsatz wenigstens eine Schneidecke auf.

In anderen Worten weicht der Schneideinsatz gemäß diesem Ausführungsbeispiel von einer kreisrunden Form ab.

Der Schneideinsatz kann eine polygonale Form aufweisen. In diesem Fall weist der Schneideinsatz durch Schneidecken begrenzte Schneidkanten auf. Insbesondere bevorzugt ist der Schneideinsatz als im Wesentlichen dreieckige Platte mit drei zur Zerspanung nutzbaren Schneidecken ausgebildet.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: ein Werkzeugsystem in einem Ausführungsbeispiel
- Fig. 2:: das Werkzeugsystem von Figur 1 in einer Draufsicht
- Figur 3: ein Werkzeugsystem in einem weiteren Ausführungsbeispiel
- Figur 4: das erfindungsgemäße Werkzeugsystem in einem Ausführungsbeispie gemäß der Erfindung

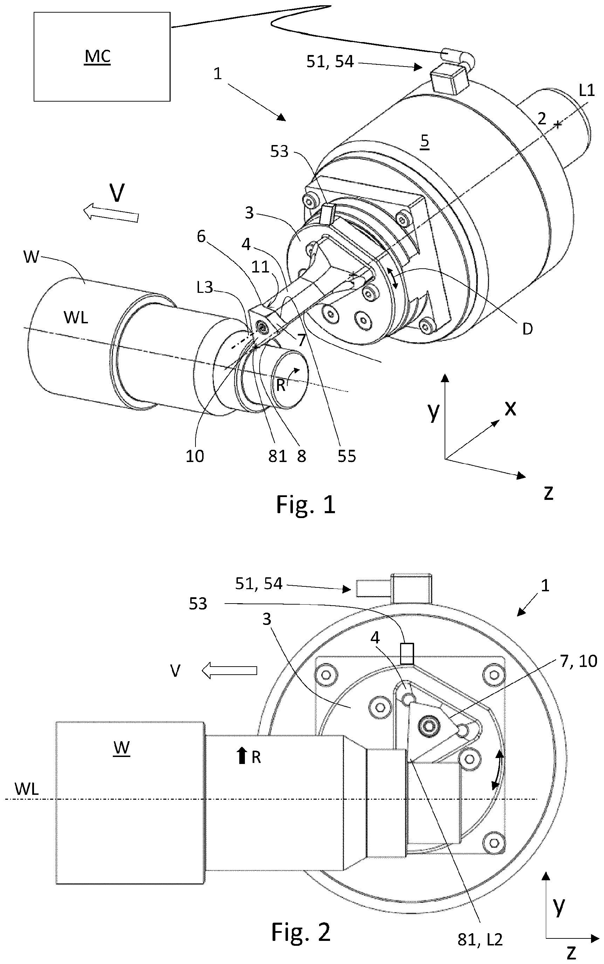

Figur 1 zeigt ein Werkzeugsystem 1 in einer perspektivischen Ansicht.

Das Werkzeugsystem 1 weist einen in eine Werkzeugaufnahme einbringbaren Aufnahmeschaft 2 mit einer Längsachse L1 auf.

Der Aufnahmeschaft 2 kann wie vorliegend beispielsweise zylindrisch ausgeführt sein oder etwa konisch, zum Beispiel als HSK-Aufnahme (Hohlschaftkegel). Das Werkzeugsystem 1 weist einen werkzeugseitigen Schaft 3 mit einer Längsachse L2 auf, welche Längsachse L2 im vorliegenden Beispiel mit der Längsachse L1 des Aufnahmeschafts 2 zusammenfällt.

Am werkzeugseitigen Schaft 3 ist ein Werkzeughalter 4 mit einer Längsachse L3 angeordnet, wobei die Längsachse L2 des werkzeugseitigen Schafts 3 und die Längsachse L3 des Werkzeughalters 4 parallel zueinander verlaufen. Die Längsachsen des werkzeugseitigen Schafts 3 und die des Werkzeughalters 4 können auch zusammenzufallen. Das Werkzeugsystem 1 ist zur Aufnahme in einer Werkzeugmaschine (nicht gezeigt) vorgesehen.

An einer Stirnseite des Werkzeughalters 4 ist ein Plattensitz 6 zur rotationsfesten Aufnahme eines auswechselbaren Schneideinsatzes 7 ausgebildet.

Der Schneideinsatz 7 weist eine als Spanfläche ausgebildete Oberseite 10, eine als Anlagefläche ausgebildete Unterseite 11, eine als Freifläche ausgebildete umlaufende Seitenfläche und an einem Übergang von der Oberseite 10 zu der umlaufenden Seitenfläche eine Schneidkante 9 auf. Bevorzugt, und wie im vorliegenden Ausführungsbeispiel dargestellt, weist der Schneideinsatz 7 wenigstens eine Schneidecke 8 auf. In anderen Worten handelt es sich bei dem Schneideinsatz 7 bevorzugt um einen polygonalen Schneideinsatz mit wenigstens einer Schneidecke 8.

Die als Spanfläche ausgebildete Oberseite 10 des Schneideinsatzes 7 erstreckt sich quer zur Längsachse L3 des Werkzeughalters 4. Quer" umfasst auch Anordnungen ungleich 90°.

Bevorzugt ist eine an die Oberseite 10 des Schneideinsatzes 7 angelegte Ebenennormale parallel zur Längsachse L3 des Werkzeughalters 4. Die Orientierung der Oberseite 10 des Schneideinsatzes 7 "quer" zur Längsachse L3 des Werkzeughalters 4 drückt aus, dass die Oberseite 10 des Schneideinsatzes 7 sich im Wesentlichen senkrecht zur Längsachse L3 des Werkzeughalters 4 erstreckt. Die Angabe "in Wesentlichen senkrecht" umfasst Winkelabweichungen von wenigen Graden, beispielsweise bis 10°.

Bevorzugt ist eine rechtwinkelige Anordnung der Oberseite 10 zur Längsachse L3 des Werkzeughalters 4.

Dargestellt ist das Werkzeugsystem 1 im Einsatz in einer Drehbearbeitung. Ein Werkstück - W - rotiert mit einer Rotationsrichtung - R - um eine

Werkstücklängsachse - WL - (auch als z-Achse bezeichnet). Ein Vorschub des Werkzeugsystems 1 erfolgt in einer Vorschubrichtung - V - parallel zur z-Achse, hier in negativer z-Richtung. Der Schneideinsatz 7 ist über eine Schneidecke 81 und einen Abschnitt einer Schneidkante 8 im Eingriff.

Im dargestellten Eingriff mit dem rotierenden Werkstück - W - mit einer Längsachse - WL - bewirkt die Orientierung des Schneideinsatzes 7, dass Späne an der als Spanfläche ausgebildeten Oberseite 10 des Schneideinsatzes 7 ablaufen. Die Anordnung bewirkt weiters, dass auftretende Bearbeitungskräfte im Wesentlichen axial in Richtung der Längsachse L3 des Werkzeughalters 4 auf den Werkzeughalter 4 wirken, während bei konventionellen Anordnungen zum Drehen mit einem auskragenden Drehmeißel die Bearbeitungskräfte ein Biegemoment auf einen den Schneideinsatz tragenden Werkzeughalter ausüben.

Insbesondere bevorzugt ist vorgesehen, dass die Längsachse L3 des Werkzeughalters 4 und die Längsachse L2 des werkzeugseitigen Schafts 3, welche Achsen parallel zueinander verlaufen, nur geringen Abstand voneinander aufweisen, oder - weiter bevorzugt - zusammenfallen. Durch eine Anordnung des Werkzeughalters 4 am werkzeugseitigen Schaft 3 mit geringer Exzentrizität bezüglich der Längsachse L2 des werkzeugseitigen Schafts 3 ist sichergestellt, dass die wirkenden Zerspanungskräfte gut abgestützt werden.

Bei dem Bearbeitungsverfahren der Erfindung ist es bevorzugt vorgesehen, dass die Oberseite 10 des Schneideinsatzes 7 parallel zur Längsachse - WL - des um seine Längsachse - WL - rotierenden Werkstücks - W - verläuft. In anderen Worten ist das Werkzeugsystem 1 bevorzugt so gegenüber dem Werkstück - W - orientiert, dass ein Tangentialvektor der Rotation des Werkstücks - W - im Eingriffspunkt des Schneideinsatzes 7 parallel zur Ebenennormale der Oberseite 10 des Schneideinsatzes 7 verläuft. So werden Bearbeitungskräfte axial in den Werkzeughalter 4 eingeleitet.

Das Werkzeugsystem 1 umfasst einen elektrischen Stellantrieb 5, der dazu ausgebildet ist, durch ein Drehen des werkzeugseitigen Schafts 3 um dessen Längsachse L2 eine Ausrichtung des Schneideinsatzes 7 zu verändern.

Die vom elektrischen Stellantrieb 5 bewirkte Drehbewegung - D - um die Längsachse L2 des werkzeugseitigen Schafts 3 verändert beispielsweise einen Anstellwinkel des Schneideinsatzes 7.

Durch den elektrischen Stellantrieb 5 kann das Werkzeugsystem 1 besonders vielfältig eingesetzt werden. Indem das Werkzeugsystem 1 eine Veränderung einer Ausrichtung des Schneideinsatzes 7 erlaubt, kann der gleiche Schneideinsatz 7 für verschiedene Zerspanungsoperationen verwendet werden, beispielsweise wenn diese unterschiedliche Anstellwinkel erfordern.

Weist der Schneideinsatz 7, wie bevorzugt vorgesehen, wenigstens zwei voneinander verschiedene Schneidkanten 8 auf, kann beispielsweise in einer Aufspannung eine andere Schneidkante in eine Bearbeitungsposition für einen nächsten Bearbeitungsschritt gebracht werden. So kann der gleiche Schneideinsatz 7 für verschiedene Zerspanungsoperationen verwendet werden, beispielsweise wenn diese unterschiedliche Formen von Schneidkanten erfordern.

Insbesondere kann bei einer Drehbearbeitung beispielsweise ein Anstellwinkel des Schneideinsatzes im Schnitt, also während der Zerspanung, durch den elektrischen Stellantrieb 5 verändert werden.

Nach einer bevorzugten Ausführung des Verfahrens wird für ein Längsdrehen mit großen Vorschubgeschwindigkeiten ein flacher Anstellwinkel gewählt, und der Anstellwinkel für das Erzeugen einer Schulter am Werkstück - W - durch Betätigen des elektrischen Stellantriebs 5 vergrößert.

Es kann vorgesehen sein, die vom elektrischen Stellantrieb 5 bewirkte Drehung mit einer Translationsbewegung des Werkzeugsystems 1 entlang einer Richtung parallel zur y-Achse zu koordinieren. Anders ausgedrückt, kann eine durch Drehung des Schneideinsatzes 7 bewirkte radiale Abstandsänderung gegenüber der Werkstücklängsachse - WL - durch eine ausgleichende Translationsbewegung des Werkzeugsystems 1 kompensiert werden.

So ist insbesondere eine Schnitttiefenkorrektur möglich.

Die Drehbewegung - D - zur Veränderung einer Ausrichtung des Schneideinsatzes 7 für eine oder während einer Zerspanungsoperation liegt typischerweise im Bereich von Bruchteilen von (Winkel)graden oder wenigen Graden, mit einem Grad [°] definiert als 360ter Teil des Vollwinkels.

Eine Winkelgeschwindigkeit bei der Ausübung der Drehbewegung - D - liegt typischerweise im Bereich etlicher Umdrehungen / Minute. Für eine rasche Verstellung können Winkelgeschwindigkeiten zwischen 10 und 600 Umdrehungen / Minute angesetzt werden. Für eine Feinverstellung können beispielsweise Winkelgeschwindigkeiten zwischen 0,1 und 10 Umdrehungen / Minute günstig sein.

Es sind dies also gänzlich andere Größenordnungen, als sie beim Antrieb von rotierenden Werkzeugen üblich sind.

In einer Weiterbildung des Verfahrens kann es vorgesehen sein, die Drehbewegung als oszillierende Drehbewegung kleiner Amplitude auszuführen. Damit kann beispielsweise eine Spanbildung günstig beeinflusst werden und / oder eine Werkstückoberfäche drallfrei hergestellt werden. Geeignete Amplituden liegen im Bereich weniger Winkelgrade, beispielsweise unter 3°.

Der elektrische Stellantrieb 5 ist im vorliegenden Ausführungsbeispiel mit einer externen Stromversorgung 51 ausgestattet.

Die Stromversorgung kann z.B. kabelgebunden, induktiv oder über Schleifkontakte erfolgen.

Alternativ kann die Stromversorgung 51 auch im Werkzeugsystem 1 integriert sein, etwa über eine Batterie.

Das Werkzeugsystem 1 weist im vorliegenden Ausführungsbeispiel und bevorzugt eine Datenschnittstelle 54 auf, über die Befehle zur Betätigung des elektrischen Stellantriebs 5 eingelesen und / oder Daten ausgelesen werden können.

Gezeigt ist ferner schematisch eine Maschinensteuerung - MC - einer Werkzeugmaschine (nicht gezeigt). Die Maschinensteuerung - MC - ist für eine Datenübertragung mit der Datenschnittstelle 54 verbunden.

In einer bevorzugten Weiterbildung erfolgt die Datenübertragung zum und vom Werkzeugsystem 1 kabellos. Die Datenschnittstelle ist insbesondere kabellos ausgeführt, beispielsweise als 2,4Ghz ISM-Band.

Alternativ können die Daten optisch oder induktiv berührungslos an die Maschine übertragen werden.

Das Werkzeugsystem 1 kann bevorzugt einen Drehgeber 53 zur Erfassung der vom elektrischen Stellantrieb 5 vollzogenen Drehbewegung - D - aufweisen.

Bevorzugt weist das Werkzeugsystem 1 wenigstens einen Sensor 55 zur Erfassung von Betriebsbedingungen auf. Der Sensor 55 kann beispielsweise als Sensor zur Kraftmessung im Bereich des Plattensitzes 6 realisiert sein, wie in Figur 1 angedeutet. Erfasste Betriebsbedingungen können beispielsweise Bearbeitungskräfte sein.

Der Sensor 55 kann etwa Daten zu Schnittbedingungen beispielsweise über die Datenschnittstelle 54 zu einer Auslesung bereitstellen.

In einem Bearbeitungsverfahren mit einem erfindungsgemäßen Werkzeugsystem 1 können bei Vorhandensein eines Mittels 55 zur Erfassung von Schnittbedingungen erfasste Daten zu Schnittbedingungen in eine Regelung oder Steuerung des elektrischen Stellantriebs 5 eingehen. Beispielsweise kann beim Überschreiten oder Unterschreiten bestimmter Schwellwerte eine Ausrichtung des Schneideinsatzes 7 über Betätigung des elektrischen Stellantriebs 5 korrigiert werden.

Günstig ist es, den Sensor 55 zur Erfassung von Betriebsbedingungen nahe an dem Schneideinsatz 7 zu positionieren, insbesondere wenn Temperaturdaten erfasst werden sollen.

In einer Weiterbildung können Informationen zu Schnittbedingungen durch Messung der Motorströme im elektrischen Stellantrieb 5 und / oder der zur Ausübung bestimmter Haltemomente erforderlichen Ströme im elektrischen Stellantrieb 5 erfasst werden:
von Bearbeitungskräften verursachte Drehmomente oder Auslenkungen des werkzeugseitigen Schafts 3 können über elektrische Ströme im elektrischen Stellantrieb 5 erfasst werden. Diese Ströme können als Information zu Schnittbedingungen (beispielsweise Schnittkräfte, Vibrationen, Rattern) interpretiert oder damit korreliert werden.

Solchermaßen fungiert der elektrische Stellantrieb 5 selbst als Sensor 55 zur Erfassung von Schnittbedingungen.

Auf eine wiederholte Diskussion bereits eingeführter Bezugszeichen wird im Folgenden verzichtet.

Figur 2 zeigt das Werkzeugsystem 1 von Figur 1 in einer Draufsicht parallel zu der Längsachse - L2 - des werkzeugseitigen Schafts 3.

Im vorliegenden Ausführungsbeispiel ist das Werkzeugsystem 1 so ausgebildet, dass die Längsachse L2 des werkzeugseitigen Schafts 3, welche zugleich Drehachse der vom elektrischen Stellantrieb 5 ausübbaren Drehbewegung - D - ist, durch den Schneideckenradiusmittelpunkt der Schneidecke 81 verläuft. Eine Kontur der betreffenden Schneidecke 81 ist damit invariant bezüglich einer mittels des elektrischen Stellantriebs 5 bewirkten Verdrehung des Schneideinsatzes 7. In anderen Worten bleibt bei einer Drehung des Schneideinsatzes 7 um besagte Drehachse ein radialer Abstand der Schneidecke 81 gegenüber der Werkstücklängsachse - WL - unverändert.

Es braucht in diesem Fall bei der Drehung des Schneideinsatzes 7 nicht zwingend eine Korrektur der Zustellung zum Werkstück in y-Richtung erfolgen.

Für alle Ausführungsformen ist bevorzugt vorgesehen, dass der Werkzeughalter 4 so angeordnet ist, dass sich der Werkzeughalter 4 - in einer Draufsicht entlang der Längsachse L2 des werkzeugseitigen Schafts 3 - innerhalb eines Umkreises einer Außenkontur des werkzeugseitigen Schafts 3 befindet.

Für alle Ausführungsformen ist weiter bevorzugt vorgesehen, dass der Werkzeughalter 4 so angeordnet ist, dass die Längsachse L2 des werkzeugseitigen Schafts 3 innerhalb der als Spanfläche ausgebildeten Oberseite 10 des Schneideinsatzes 7 liegt. In anderen Worten liegt die Drehachse der Drehbewegung - D - bevorzugt innerhalb der Außenkontur des Schneideinsatzes 7.

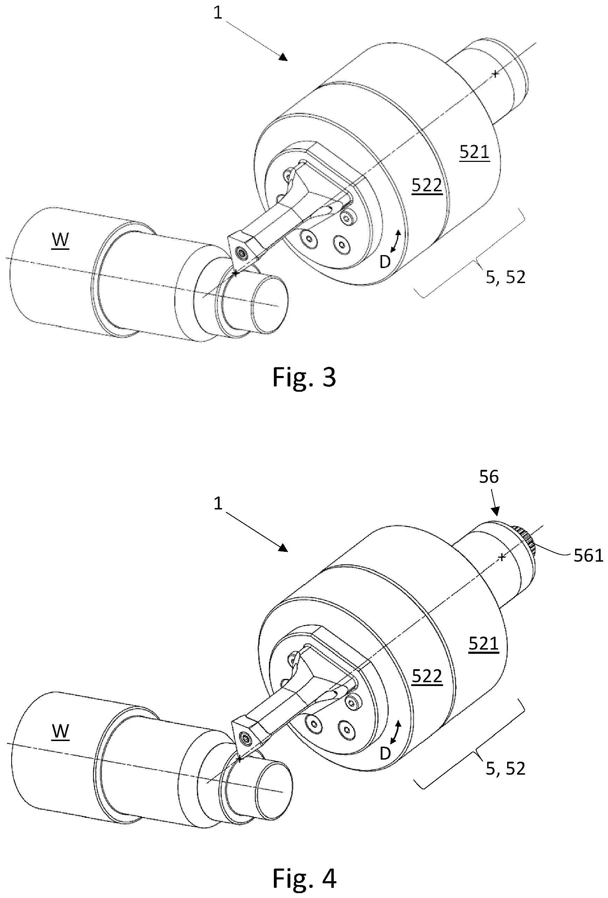

Figur 3 zeigt das Werkzeugsystem 1 in einem weiteren Ausführungsbeispiel. Der elektrische Stellantrieb 5 ist in dem Ausführungsbeispiel als als induktiver Drehübertrager 52 umfassend einen Stator 521 und einen mit dem werkzeugseitigen Schaft 3 drehfest verbundenen Rotor 522 ausgebildet. Diese Ausführungsform erlaubt eine besonders kompakte Bauweise des elektrischen Stellantriebs 5 und damit des Werkzeugsystems 1 selbst.

Zudem ist ein einfaches Ein- und Auswechseln des mechatronischen Antriebs möglich. Auch können so mehrere Ausführungen des mechatronischen Antriebs flexibel eingewechselt werden (Schnellwechsellösung).

Wartungs- oder Servicearbeiten am Antrieb sind einfach möglich.

Eine Rotor-Stator-Lösung lässt sich mit geringem Aufwand nachrüsten. Figur 4 zeigt die erfindungsgemäße Ausführung, die nicht auf die Ausführung des Stellantriebs 5 als Drehübertrager 52 gebunden ist.

Gemäß dieser Ausführung weist das Werkzeugsystem 1 ein Generatormodul 56 zur Wandlung einer mechanischen Antriebsleistung in elektrische Leistung zur Versorgung des elektrischen Stellantriebs 5, 52 auf.

So kann eine mechanische Antriebsleistung, wie sie an angetriebenen Werkzeugaufnahmen zur Verfügung steht, in elektrische Leistung zur Versorgung des elektrischen Stellantriebs 5, 52 gewandelt werden. Die mechanische Antriebsleistung kann beispielsweise über eine entsprechende Kupplung 561 am Aufnahmeschaft 2 von einer angetriebenen Werkzeugaufnahme abgegriffen werden.

Das erfindungsgemäße Werkzeugsystem 1 braucht dann keine externe Stromversorgung aufzuweisen.

Die anhand der Figuren diskutierten Weiterbildungen sind untereinander frei kombinierbar.

## Patentansprüche

1. Werkzeugsystem mit
einem in eine Werkzeugaufnahme einbringbaren Aufnahmeschaft (2) mit einer Längsachse (L1),
einem werkzeugseitigen Schaft (3) mit einer Längsachse (L2), an welchem werkzeugseitigen Schaft (3) ein Werkzeughalter (4) mit einer Längsachse (L3) angeordnet ist, wobei die Längsachse (L2) des werkzeugseitigen Schafts (3) und die Längsachse (L3) des Werkzeughalters (4) zusammenfallen oder wenigstens parallel zueinander verlaufen,
wenigstens einem, an einer Stirnseite des Werkzeughalters (4) ausgebildeten Plattensitz (6) zur Aufnahme eines auswechselbaren Schneideinsatzes (7),
einem rotationsfest an dem Plattensitz (6) befestigten auswechselbaren Schneideinsatz (7),
wobei der Schneideinsatz (7) eine als Spanfläche ausgebildete Oberseite (10), eine als Anlagefläche ausgebildete Unterseite (11), eine als Freifläche ausgebildete umlaufende Seitenfläche aufweist und an einem Übergang von der Oberseite (10) zu der umlaufenden Seitenfläche eine Schneidkante (9) ausgebildet ist,
und am Plattensitz (6) so angeordnet ist, dass die als Spanfläche ausgebildete Oberseite (10) des Schneideinsatzes (7) sich quer zur Längsachse (L3) des Werkzeughalters (4) erstreckt,
**dadurch gekennzeichnet, dass** das Werkzeugsystem (1) einen elektrischen Stellantrieb (5) umfasst, der dazu ausgebildet ist, durch ein Drehen des werkzeugseitigen Schafts (3) um dessen Längsachse (L2) eine Ausrichtung des Schneideinsatzes (7) zu verändern, und das
Werkzeugsystem (1) ein Generatormodul (56) zur Wandlung einer mechanischen Antriebsleistung in elektrische Leistung zur Versorgung des elektrischen Stellantriebs (5) aufweist.

2. Werkzeugsystem nach Anspruch 1, wobei der Werkzeughalter (4) so angeordnet ist, dass sich der Werkzeughalter (4) in einer Draufsicht entlang der Längsachse (L2) des werkzeugseitigen Schafts (3) innerhalb eines Umkreises einer Außenkontur des werkzeugseitigen Schafts (3) befindet.

3. Werkzeugsystem nach Anspruch 1 oder 2, wobei der Werkzeughalter (4) so angeordnet ist, dass die Längsachse (L2) des werkzeugseitigen Schafts (3) innerhalb der als Spanfläche ausgebildeten Oberseite (10) des Schneideinsatzes (7) liegt.

4. Werkzeugsystem (1) nach einem der vorangegangenen Ansprüche, wobei die Längsachse (L2) des werkzeugseitigen Schafts (3) parallel zur Längsachse (L1) des Aufnahmeschafts (2) verläuft.

5. Werkzeugsystem (1) nach einem der vorangegangenen Ansprüche, wobei die Schneidplatte (7) wenigstens eine Schneidecke (8) aufweist.

6. Werkzeugsystem nach einem der vorangegangenen Ansprüche, wobei das Werkzeugsystem (1) Mittel zur Steuerung und / oder Regelung einer Positionierung des Werkzeughalters (4) umfasst.

7. Werkzeugsystem (1) nach einem der vorangegangenen Ansprüche, wobei der elektrische Stellantrieb (5) als induktiver Drehübertrager (52) umfassend einen Stator (521) und einen mit dem werkzeugseitigen Schaft (3) drehfest verbundenen Rotor (522) ausgebildet ist.

8. Werkzeugsystem (1) nach einem der vorangegangenen Ansprüche, wobei das Werkzeugsystem (1) einen Drehgeber (53) zur Erfassung der vom elektrischen Stellantrieb (5) vollzogenen Drehbewegung (D) aufweist.

9. Werkzeugsystem (1) nach einem der vorangegangenen Ansprüche, wobei das Werkzeugsystem (1) eine Datenschnittstelle (54) aufweist, über die Befehle zur Betätigung des elektrischen Stellantriebs (5) eingelesen und / oder Daten ausgelesen werden können.

10. Werkzeugsystem (1) nach einem der vorangegangenen Ansprüche, wobei das Werkzeugsystem (1) wenigstens einen Sensor (55) zur Erfassung von Betriebsbedingungen aufweist.

11. Werkzeugsystem (1) nach einem der vorangegangenen Ansprüche, wobei das Werkzeugsystem (1) dazu ausgebildet ist, in einer Verwendung an einer numerisch gesteuerten Werkzeugmaschine an eine Maschinensteuerung der Werkzeugmaschine Daten zu übermitteln und / oder von der Maschinensteuerung angesteuert zu werden.

12. Verfahren zur Bearbeitung eines Werkstücks (W) mit einem Werkzeugsystem (1) nach einem der vorangegangenen Ansprüche, wobei das Verfahren die Schritte aufweist:
- Rotieren des Werkstücks (W) um eine Werkstückachse (WL),
- zerspanende Bearbeitung einer Oberfläche des Werkstücks (W) mit dem Schneideinsatz (7),
- Verändern einer Ausrichtung des Schneideinsatzes (7) durch eine von dem elektrischen Stellantrieb (5) bewirkte Drehbewegung (D), wobei die elektrische Leistung zur Versorgung des elektrischen Stellantriebs (5) vom Generatormodul (56) durch Wandlung einer mechanischen Antriebsleistung zur Verfügung gestellt wird.

## Claims

1. Tool system with
a mounting shank (2) with a longitudinal axis (L1) that can be inserted into a tool holder,
a tool-side shank (3) with a longitudinal axis (L2), on which tool-side shank (3) a tool holder (4) with a longitudinal axis (L3) is arranged, wherein the longitudinal axis (L2) of the tool-side shank (3) and the longitudinal axis (L3) of the tool holder (4) coincide or at least run parallel to one another, at least one insert seat (6) formed on one end face of the tool holder (4) for receiving an exchangeable cutting insert (7),
a replaceable cutting insert (7) rotationally fixed to the insert seat (6), wherein the cutting insert (7) has an upper side (10) formed as a rake face, a lower side (11) formed as a contact surface, a circumferential side surface formed as a clearance surface and a cutting edge (9) formed at a transition from the upper side (10) to the circumferential side surface, and is arranged on the insert seat (6) in such a way that the upper side (10) of the cutting insert (7), which is designed as a rake face, extends transversely to the longitudinal axis (L3) of the tool holder (4),
**characterized in that** the tool system (1) comprises an electric actuator (5) which is designed to change an orientation of the cutting insert (7) by rotating the tool-side shank (3) about its longitudinal axis (L2) and the tool system (1) has a generator module (56) for converting a mechanical drive power into electrical power for supplying the electric actuator (5).

2. Tool system according to claim 1, wherein the tool holder (4) is arranged such that the tool holder (4) is located within a circumference of an outer contour of the tool-side shank (3) in a plan view along the longitudinal axis (L2) of the tool-side shank (3).

3. Tool system according to claim 1 or 2, wherein the tool holder (4) is arranged such that the longitudinal axis (L2) of the tool-side shank (3) lies within the upper side (10) of the cutting insert (7), which is formed as a rake face.

4. Tool system (1) according to one of the preceding claims, wherein the longitudinal axis (L2) of the tool-side shank (3) runs parallel to the longitudinal axis (L1) of the mounting shank (2).

5. Tool system (1) according to one of the preceding claims, wherein the cutting plate (7) has at least one cutting corner (8).

6. Tool system according to one of the preceding claims, wherein the tool system (1) comprises means for controlling and/or regulating a positioning of the tool holder (4).

7. Tool system (1) according to one of the preceding claims, wherein the electric actuator (5) is designed as an inductive rotary transmitter (52) comprising a stator (521) and a rotor (522) connected to the tool-side shank (3) in a rotationally fixed manner.

8. Tool system (1) according to one of the preceding claims, wherein the tool system (1) comprises a rotary encoder (53) for detecting the rotary movement (D) performed by the electric actuator (5).

9. Tool system (1) according to one of the preceding claims, wherein the tool system (1) has a data interface (54) via which commands for actuating the electric actuator (5) can be read in and/or data can be read out.

10. Tool system (1) according to one of the preceding claims, wherein the tool system (1) comprises at least one sensor (55) for detecting operating conditions.

11. Tool system (1) according to one of the preceding claims, wherein the tool system (1) is designed to transmit data to a machine controller of the machine tool when used on a numerically controlled machine tool and / or to be controlled by the machine controller.

12. Method for machining a workpiece (W) with a tool system (1) according to one of the preceding claims,
wherein the method comprises the steps of
- Rotation of the workpiece (W) around a workpiece axis (WL),
- machining of a surface of the workpiece (W) with the cutting insert (7),
- Changing an orientation of the cutting insert (7) by a rotary movement (D) caused by the electric actuator (5), wherein the electrical power for supplying the electric actuator (5) is made available by the generator module (56) by converting a mechanical drive power.

## Revendications

1. Système d'outil avec
une tige de réception (2) pouvant être introduite dans un logement d'outil, avec un axe longitudinal (L1),
une tige côté outil (3) avec un axe longitudinal (L2), sur laquelle est agencé un support d'outil (4) avec un axe longitudinal (L3), l'axe longitudinal (L2) de la tige côté outil (3) et l'axe longitudinal (L3) du support d'outil (4) coïncidant ou s'étendant au moins parallèlement l'un à l'autre,
au moins un siège de plaquette (6) réalisé sur un côté frontal du support d'outil (4) pour recevoir un insert de coupe interchangeable (7),
un insert de coupe interchangeable (7) fixé de manière solidaire en rotation sur le siège de plaquette (6),
l'insert de coupe (7) présentant un côté supérieur (10) réalisé sous forme de surface de coupe, un côté inférieur (11) réalisé sous forme de surface d'appui, une surface latérale périphérique réalisée sous forme de surface de dépouille et une arête de coupe (9) étant réalisée à une transition entre le côté supérieur (10) et la surface latérale périphérique,
et étant agencé sur le siège de plaquette (6) de telle sorte que le côté supérieur (10) de l'insert de coupe (7) réalisé sous forme de surface de coupe s'étend transversalement à l'axe longitudinal (L3) du support d'outil (4),
**caractérisé en ce que**
le système d'outil (1) comprend un servomoteur électrique (5) qui est réalisé pour modifier une orientation de l'insert de coupe (7) par une rotation de la tige côté outil (3) autour de son axe longitudinal (L2), et le système d'outil (1) présente un module générateur (56) pour la conversion d'une puissance d'entraînement mécanique en puissance électrique pour l'alimentation du servomoteur électrique (5).

2. Système d'outil selon la revendication 1, dans lequel le support d'outil (4) est agencé de telle sorte que, dans une vue de dessus le long de l'axe longitudinal (L2) de la tige côté outil (3), le support d'outil (4) se trouve à l'intérieur d'une circonférence d'un contour extérieur de la tige côté outil (3).

3. Système d'outil selon la revendication 1 ou 2, dans lequel le support d'outil (4) est agencé de telle sorte que l'axe longitudinal (L2) de la tige côté outil (3) se situe à l'intérieur du côté supérieur (10) de l'insert de coupe (7), réalisé sous forme de surface de coupe.

4. Système d'outil (1) selon l'une quelconque des revendications précédentes, dans lequel l'axe longitudinal (L2) de la tige côté outil (3) est parallèle à l'axe longitudinal (L1) de la tige de réception (2).

5. Système d'outil (1) selon l'une quelconque des revendications précédentes, dans lequel la plaquette de coupe (7) présente au moins un coin de coupe (8).

6. Système d'outil selon l'une quelconque des revendications précédentes, dans lequel le système d'outil (1) comprend des moyens de commande et/ou de régulation d'un positionnement du support d'outil (4).

7. Système d'outil (1) selon l'une quelconque des revendications précédentes, dans lequel le servomoteur électrique (5) est réalisé sous forme de transmetteur rotatif inductif (52) comprenant un stator (521) et un rotor (522) solidaire en rotation de la tige côté outil (3) .

8. Système d'outil (1) selon l'une quelconque des revendications précédentes, dans lequel le système d'outil (1) présente un capteur de rotation (53) pour détecter le mouvement de rotation (D) effectué par le servomoteur électrique (5).

9. Système d'outil (1) selon l'une quelconque des revendications précédentes, dans lequel le système d'outil (1) présente une interface de données (54) permettant de lire des instructions pour l'actionnement du servomoteur électrique (5) et/ou de lire des données.

10. Système d'outil (1) selon l'une quelconque des revendications précédentes, dans lequel le système d'outil (1) présente au moins un capteur (55) pour détecter les conditions de fonctionnement.

11. Système d'outil (1) selon l'une quelconque des revendications précédentes, dans lequel le système d'outil (1) est configuré pour, lorsqu'il est utilisé sur une machine-outil à commande numérique, transmettre des données à une commande de machine de la machine-outil et/ou être commandé par la commande de machine.

12. Procédé d'usinage d'une pièce (W) avec un système d'outil (1) selon l'une quelconque des revendications précédentes, le procédé présentant les étapes suivantes :
- la rotation de la pièce (W) autour d'un axe de pièce (WL),
- l'usinage par enlèvement de copeaux d'une surface de la pièce (W) avec l'insert de coupe (7),
- la modification d'une orientation de l'insert de coupe (7) par un mouvement de rotation (D) provoqué par le servomoteur électrique (5), la puissance électrique pour l'alimentation du servomoteur électrique (5) étant mise à disposition par le module générateur (56) par conversion d'une puissance d'entraînement mécanique.
